# EUROPEAN PATENT APPLICATION

(11) **EP 4 800 825 A2**
(43) Date of publication of application: **02.09.2026**
(21) Application number: 26183667.0
(22) Date of filing: 23.07.2024
(51) Int. Cl.: H01M 50/271

(54) **BATTERY PACK**

(30) Priority: 26.07.2023 KR 20230097170; 21.03.2024 US 202418612826
(62) Document number(s) of the earlier application(s) in accordance with Art. 76 EPC: 24845995.0 / 4 578 065
(71) Applicant: LG Energy Solution, Ltd., Seoul 07335 (KR)
(72) Inventor: JANG, Sung Hwan, 34122 Daejeon (KR); KIM, Gwan Woo, 34122 Daejeon (KR); JEONG, Jee Hoon, 34122 Daejeon (KR); KIM, Da Young, 34122 Daejeon (KR); KIM, Jae Wook, 34122 Daejeon (KR)
(74) Representative: BCKIP Part mbB

(57) **Abstract**

A battery pack including a battery cell assembly including a cell block having a plurality of battery cells, and a bottom cover plate under a bottom surface of the cell block, a housing having an opening, and accommodating the battery cell assembly, and a pack cover coupled to the housing and covering the opening, wherein the battery cell assembly and a bottom wall of the housing are spaced apart from each other to form a first space, and wherein the bottom cover plate includes a venting passage in communication with the first space.

## Description

### [Technical Field]

The present disclosure relates to a battery pack.

### [Background Art]

Unlike primary batteries, secondary batteries are chargeable and dischargeable multiple times. The secondary batteries are widely used as energy sources for various wireless devices such as handsets, laptop computers, and cordless vacuum cleaners. In recent years, as manufacturing costs per unit capacity of secondary batteries dramatically decrease due to energy density improvement and economies of scale, and a cruising distance of battery electric vehicles (BEV) increases to a level equivalent to that of fuel vehicles, the primary use of secondary batteries shifts from mobile devices to mobilities.

As secondary batteries are used for mobility, there is a growing need for the safety of secondary batteries. When an accident such as a fire occurs in the secondary batteries used for mobility, the life of a driver can be endangered and thus research on technology for improving the safety of secondary batteries is essential. The background description provided herein is for the purpose of generally presenting context of the disclosure. Unless otherwise indicated herein, the materials described in this section are not prior art to the items in this application and are not admitted to be prior art, or suggestions of the prior art, by inclusion in this section.

### [Disclosure]

### [Technical Problem]

The present disclosure is directed to providing a battery pack with improved safety.

This and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended items and combinations thereof.

### [Technical Solution]

According to a technical idea of the present disclosure, in order to achieve the above-described object, there is provided a battery pack, including: a battery cell assembly including a cell block having a plurality of battery cells, and a bottom cover plate under a bottom surface of the cell block; a housing having an opening, and accommodating the battery cell assembly; and a pack cover coupled to the housing and covering the opening, wherein the battery cell assembly and a bottom wall of the housing are spaced apart from each other to form a first space, and wherein the bottom cover plate includes a venting passage in communication with the first space.

In exemplary embodiments, the bottom cover plate may further include: a protruding extension protruding toward the first space and extending in a first direction along the bottom surface of the cell block, wherein the venting passage may include a portion extending in the first direction in the protruding extension.

In exemplary embodiments, the bottom cover plate may further include: a main plate facing the bottom surface of the cell block, and a protruding extension extending in a first direction along the bottom surface of the cell block below the main plate, wherein the venting passage may include: a first venting passage vertically passing through the main plate, and a second venting passage extending in the first direction in the protruding extension and having an inlet connected to the first venting passage and an outlet connected to the first space.

In exemplary embodiments, the first venting passage may extend in a vertical direction, and wherein the second venting passage may extend in a horizontal direction.

In exemplary embodiments, the battery cell assembly may further include: a top cover plate on a top surface of the cell block, wherein the top cover plate may include a first cooling channel configured to allow a first cooling fluid to flow therethrough.

In exemplary embodiments, the battery cell assembly may further include: a first thermally conductive adhesive layer between the top cover plate and the cell block.

In exemplary embodiments, the battery cell assembly may be coupled to the pack cover.

In exemplary embodiments, the pack cover may include a second cooling channel configured to allow a second cooling fluid to flow therethrough.

In exemplary embodiments, the battery pack may further include a second thermally conductive adhesive layer between the battery cell assembly and the pack cover.

In exemplary embodiments, the battery cell assembly may further include: a side cover plate on at least one side of the cell block, and wherein the side cover plate may be fastened to the housing.

In exemplary embodiments, the battery cell assembly may further include side cover plates spaced apart from each other.The cell block may be disposed between the side cover plates. The side cover plates may be fastened to different support blocks provided in the housing.

In exemplary embodiments, a sealed portion of a pouch in the pouch-type battery cell may face the first space.

In exemplary embodiments, each of the plurality of battery cells may be a cylindrical-type battery cell or a prismatic-type battery cell and comprises a venting portion.

In exemplary embodiments, the venting portion of the cylindrical-type battery cell or the prismatic-type battery cell may face the first space.

In exemplary embodiments, the present disclosure provides an electric mobility device comprising a battery pack, the battery pack including: a battery cell assembly including a cell block having a plurality of battery cells, and a bottom cover plate under a bottom surface of the cell block; a housing having an opening, and accommodating the battery cell assembly; and a pack cover coupled to the housing and covering the opening, wherein the battery cell assembly and a bottom wall of the housing are spaced apart from each other to form a first space, and wherein the bottom cover plate comprises a venting passage in communication with the first space.

In exemplary embodiments, the electric mobility device may be an electric vehicle.

In exemplary embodiments, the battery pack may further include: an exhaust portion in communication with the first space.

In exemplary embodiments, the exhaust portion may be located at a side of the housing facing a rear side of the electric mobility device.

In exemplary embodiments, the present disclosure provides a battery pack, including: a battery cell assembly including a cell block having a plurality of battery cells, a top cover plate on a top surface of the cell block, a bottom cover plate under a bottom surface of the cell block, a side cover plate on at least one side of the cell block, and a first thermally conductive adhesive layer between the top cover plate and the cell block; a housing having an opening, and accommodating the battery cell assembly; a pack cover coupled to the housing and covering the opening; and a second thermally conductive adhesive layer between the battery cell assembly and the pack cover, wherein the battery cell assembly and a bottom wall of the housing are spaced apart from each other to form a first space, wherein the bottom cover plate comprises a venting passage in communication with the first space, wherein the top cover plate comprises a first cooling channel configured to allow a first cooling fluid to flow therethrough, and wherein the pack cover comprises a second cooling channel configured to allow a second cooling fluid to flow therethrough.

In exemplary embodiments, the battery pack may further includes: an exhaust portion in communication with the first space.

According to exemplary embodiments of the present disclosure, a free volume (first space) functioning as a buffer for an external impact is provided between a bottom of a battery pack and a battery cell assembly, so that damage to the battery cell assembly and/or a battery cell due to the external impact can be prevented, and ultimately, safety of the battery pack can be improved. Furthermore, according to exemplary embodiments of the present disclosure, a venting passage provided in a free volume and a bottom cover plate of a battery cell assembly forms a directional venting passage in a battery pack, so that high-temperature gas or flames in the battery pack can be discharged to the outside of the battery pack through the directional venting passage. Accordingly, passengers can be protected in the situation of a thermal runaway event, thereby improving the safety of the battery pack.

Furthermore, even when the amount of deformation of a bottom wall of a pack housing due to an external impact exceeds a height of a free volume provided in the pack housing, a protruding extension of a bottom cover plate can function as a protective member that protects a cell block, thereby improving the safety of the battery pack.

The effects obtained in exemplary embodiments of the present disclosure are not limited to the above-mentioned effects, and other effects not mentioned above may be clearly derived and understood by a person skilled in the art to which the exemplary embodiments of the present disclosure belong from the following description. That is, unintended effects in implementing exemplary embodiments of the present disclosure may also be derived by a person skilled in the art from the exemplary embodiments of the present disclosure.

### [Advantageous Effects]

According to an exemplary embodiment, since the free volume functioning as a buffer for an external impact is provided between the bottom of the battery pack and the battery cell assembly, damages to the battery cell assembly and/or the battery cell due to the external impact may be prevented, and ultimately, the safety of the battery pack may be improved.

Furthermore, according to an exemplary embodiment, the free volume and the venting passage provided in the bottom cover plate of the battery cell assembly together form a directional venting passage in the battery pack, and a high-temperature gas or flames in the battery pack may be discharged to the outside of the battery pack through the directional venting passage. Accordingly, passengers may be protected in the situation of a thermal runaway event, and thus safety of the battery pack may be improved.

Furthermore, even when the amount of deformation of the bottom wall of the pack housing exceeds the height of the free volume provided to the pack housing 501 due to the external impact, the protruding extension of the bottom cover plate may function as a protective member that protects the cell block, thereby improving the safety of the battery pack.

### [Description of Drawings]

FIG. 1 is a perspective view illustrating a battery cell assembly according to an exemplary embodiment of the present disclosure.
FIG. 2 is a perspective view illustrating the battery cell assembly according to an exemplary embodiment of the present disclosure.
FIG. 3 is an exploded perspective view illustrating the battery cell assembly according to an exemplary embodiment of the present disclosure.
FIG. 4A is a cross-sectional view illustrating the battery cell assembly according to an exemplary embodiment of the present disclosure.
FIG. 4B is a cross-sectional view illustrating a portion of the bottom cover plate of the battery cell assembly according to an exemplary embodiment of the present disclosure.
FIG. 5 is a cross-sectional view illustrating a battery pack according to an exemplary embodiment of the present disclosure.
FIG. 6 is a cross-sectional view illustrating an operation example of the battery pack.
FIG. 7 is a cross-sectional view illustrating a battery pack according to an exemplary embodiment of the present disclosure.
FIG. 8 is a cross-sectional view illustrating a battery pack according to another exemplary embodiment of the present disclosure.
FIG. 9A is a cross-sectional view illustrating a battery pack according to yet another exemplary embodiment of the present disclosure.
FIG. 9B is a perspective view illustrating a bottom cover plate of the battery cell assembly illustrated in FIG. 9A.
FIG. 10 is a schematic view illustrating an electric vehicle equipped with the battery pack according to an exemplary embodiment of the present disclosure.

### [Best Mode]

Hereinafter, exemplary embodiments of the present disclosure will be described in detail with reference to the accompanying drawings. Prior to this, the terms and words used in the present specification and items should not be construed as being limited to general or dictionary terms and should be interpreted with the meaning and concept in accordance with the technical idea of the present disclosure based on the technical idea that the inventors have appropriately defined the concepts of terms in order to explain the invention in the best way.

Therefore, since the embodiments described herein and the configurations illustrated in the drawings are merely one of the examples of the present disclosure and do not represent the overall technical idea of the present disclosure, it should be understood that the present disclosure covers various equivalents, modifications, and substitutions at the time of filing of this application. Further, in the following description of the present disclosure, a detailed description of known configurations or functions incorporated herein will be omitted when it is determined that such description may make the gist of the present disclosure rather unclear.

Since the embodiments of the present disclosure are provided to more fully illustrate the present disclosure to those of ordinary skill in the art, the shapes and sizes of components in the drawings may be exaggerated, omitted, or schematically illustrated for clarity. Thus, the size or ratio of each component is not entirely reflecting the actual size or ratio.

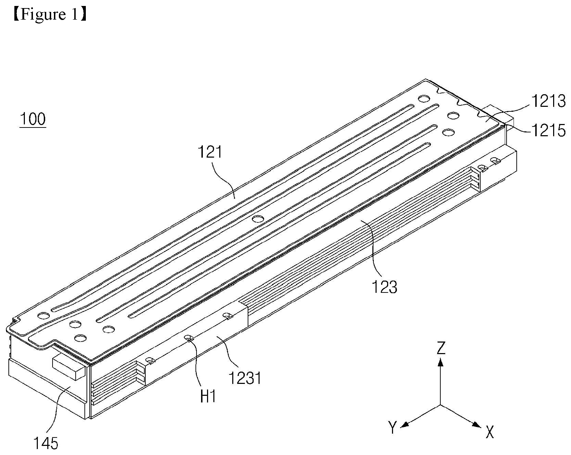

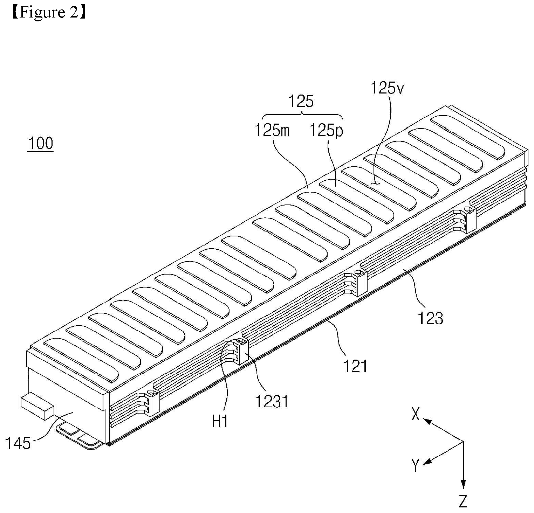

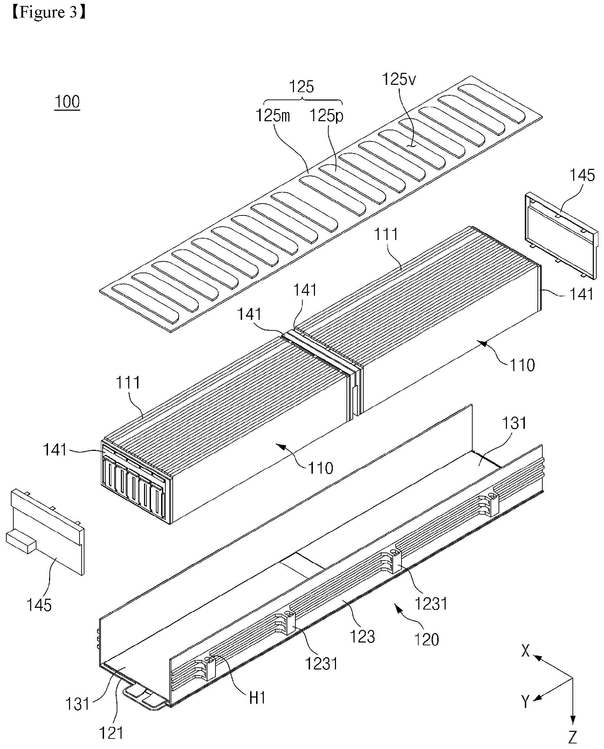

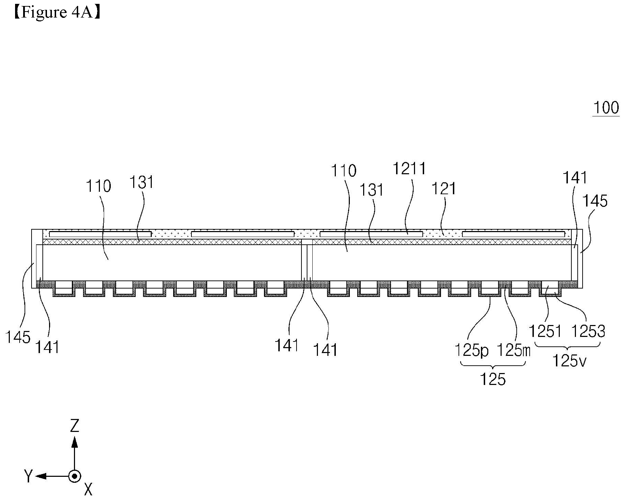

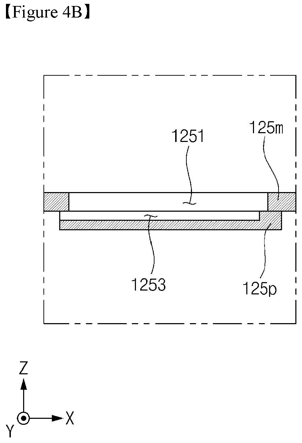

FIGs. 1, 2, 3, 4A and 4B are views illustrating a battery cell assembly 100 according to exemplary embodiments of the present disclosure, wherein FIGs. 1 and 2 are perspective views illustrating the battery cell assembly 100 as viewed in different directions, FIG. 3 is an exploded perspective view illustrating the battery cell assembly 100, FIG. 4A is a cross-sectional view illustrating the battery cell assembly 100, and FIG. 4B is a cross-sectional view illustrating a portion of a bottom cover plate 125 of the battery cell assembly 100.

Referring to FIGs. 1 to 4B, the battery cell assembly 100 may include a cell block 110, a case 120, and a busbar frame assembly 141.

The cell block 110 may include a plurality of battery cells 111. Each of the battery cells 111 is a basic unit of a lithium-ion battery, *i.e*., a secondary battery. Each battery cell 111 may include an electrode assembly, an electrolyte, and a cell case. The electrode assembly embedded in the cell case may include a positive electrode, a negative electrode, and a separator between the positive electrode and the negative electrode. The electrode assembly may be any one of a jelly-roll type electrode assembly and a stack type electrode assembly according to an assembly type. The jelly-roll type electrode assembly may include a wound structure of a positive electrode, a negative electrode, and a separator interposed between the positive electrode and the negative electrode. The stack-type electrode assembly may include a plurality of positive electrodes, a plurality of negative electrodes, and a plurality of separators respectively interposed therebetween, all of which are sequentially stacked on one another. The positive electrode may include a positive electrode current collector and a positive electrode active material. The negative electrode may include a negative electrode current collector and a negative electrode active material.

The plurality of battery cells 111 may be connected in series and/or in parallel. As an example, the plurality of battery cells 111 may be connected to each other in series. As an another example, the plurality of battery cells 111 may be connected to each other in parallel. As an another example, when a set of two or more battery cells 111 connected to each other in parallel is defined as a bank, one bank composed of two or more battery cells 111 connected to each other in parallel and another bank composed of two or more battery cells 111 connected to each other in parallel may be connected in series.

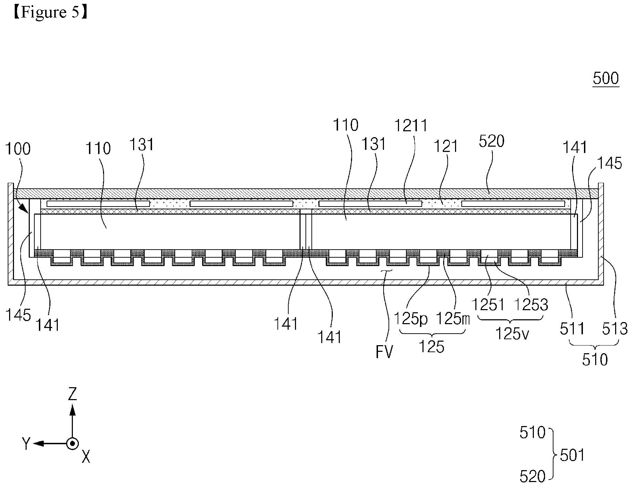

Each battery cell 111 may correspond to a pouch-type battery cell, a cylindrical battery cell, or a prismatic battery cell. The electrode assembly may be included in various cell cases, *e.g.*, a pouch, a cylindrical can, or a prismatic can. The electrode assembly of a pouch-type battery cell may be included in a pouch case including an aluminum laminate sheet. The electrode assembly of a cylindrical battery cell may be included in a cylindrical metal can. The electrode assembly of a prismatic battery cell may be included in a prismatic metal can. Each battery cell 111 may comprise a venting portion that faces the first space. For example, the venting portion of each battery cell 111 may be provided in the cell case of the battery cell 111. When the pressure in the cell case of each battery cell 111 exceeds a certain level, the gas within the cell case of each battery cell 111 may be discharged into the first space through the venting portion of each battery cell 111. The first space may be provided between the bottom wall 511 (*see* FIG. 5) of the lower housing 510 (*see* FIG. 5) and the battery cell assembly 100 (*see* FIG. 5).

In an exemplary embodiment, each battery cell 111 may correspond to a pouch-type battery cell, and the plurality of battery cells 111 may be stacked in a first direction (X direction) in one battery cell assembly 100 (for example, FIG. 3). In an exemplary embodiment, in each battery cell assembly 100, each of the plurality of battery cells 111 may correspond to a pouch-type battery cell having a length (thickness) in the first direction (X direction) smaller than a length in a second direction (Y direction), and the plurality of battery cells 111 may be stacked in the first direction (X direction). In an exemplary embodiment, each battery cell 111 may be a pouch-type battery cell, and a sealed portion of a pouch in the pouch-type battery cell may face the first space in order to easily exhaust the gas and/or flames from the battery cell. When the pressure in the pouch exceeds a certain level, the sealed portion of the pouch is partially broken, and the gas in the pouch may be discharged into the first space through the broken portion of the sealed portion.

When viewed in a plan view, the cell block 110 may have a rectangular shape. In this case, the cell block 110 may have first and second side surfaces opposite to each other in the first direction (X direction), front and rear surfaces opposite to each other in the second direction (Y direction), and top and bottom surfaces opposite to each other in a third direction (Z direction).

The busbar frame assembly 141 may be disposed on each of the front and rear surfaces of the cell block 110. The busbar frame assembly 141 may include a busbar frame and a plurality of busbars mounted on the busbar frame. The plurality of busbars may be mounted on the busbar frame at the front surface of the cell block 110, and may also be mounted on the busbar frame at the rear surface of the cell block 110. The battery cell assembly 100 may further include an end plate 145 for covering the busbar frame assembly 141 connected to each of the front or rear surface of the cell block 110.

The busbar may be coupled to an electrode lead of the battery cell 111. For example, the busbar may be coupled to the electrode lead of the battery cell 111 by a welding method. For example, each busbar may be an inter-busbar for electrically connecting different battery cells 111 belonging to the cell block 110 by being connected to the electrode leads connected to different battery cells 111. For example, each busbar may be a terminal-busbar for electrically connecting the battery cell assembly 100 to other external electrical devices.

In an exemplary embodiment, the battery cell assembly 100 may include a single cell block 110. In another exemplary embodiment, the battery cell assembly 100 may include a cell block array composed of a plurality of cell blocks 110 arranged in the second direction (Y direction). For example, the battery cell assembly 100 may include two cell blocks 110 arranged in the second direction (Y direction). As an example, the battery cell assembly 100 may include a first cell block and a second cell block arranged in the second direction (Y direction), and the busbar frame assembly 141 connected to a rear surface of the first cell block and the busbar frame assembly 141 connected to a front surface of the second cell block may be provided between the first cell block and the second cell block. The first cell block may be electrically connected to the second cell block through an electrical connection structure extending between the busbar frame assembly 141 connected to the rear surface of the first cell block and the busbar frame assembly 141 connected to the front surface of the second cell block. One end plate 145 may be coupled to the busbar frame assembly 141 at the front surface of the first cell block, and another one end plate 145 may be coupled to the busbar frame assembly 141 at the rear surface of the second cell block.

The case 120 may accommodate the cell block 110. For example, the case 120 may surround the top surface, the bottom surface, the first side surface, and the second side surface of each cell block 110 included in the battery cell assembly 100. The case 120 may include a top cover plate 121 facing the top surface of the cell block 110, the bottom cover plate 125 facing the bottom surface of the cell block 110, and two side cover plates 123 respectively facing the first and second side surfaces of the cell block 110.

The top cover plate 121 may cover the top surface of the cell block 110. For example, the top cover plate 121 may cover the top surfaces of all the cell blocks 110 provided in the battery cell assembly 100. The top cover plate 121 may be attached to the top surface of the cell block 110 and may be thermally coupled to the cell block 110. The top cover plate 121 may be attached to the top surface of the cell block 110 through a first thermally conductive adhesive layer 131 interposed between the top cover plate 121 and the top surface of the cell block 110. For example, the first thermally conductive adhesive layer 131 may include a thermal interface material (TIM). The top cover plate 121 may have a first cooling channel 1211 configured to allow a cooling fluid to flow therethrough, and may be configured to cool the cell block 110. The top cover plate 121 may be referred to as a cooling plate. The top cover plate 121 may be configured to cool the cell block 110 by being thermally coupled to the cell block 110 through the first thermally conductive adhesive layer 131. A cooling fluid provided from the outside of the battery cell assembly 100 may flow into the first cooling channel 1211 through an inlet of the first cooling channel 1211, flow along the first cooling channel 1211, and then flow out to the outside through an outlet of the first cooling channel 1211. Cooling of the battery cell assembly 100 may be performed while the cooling fluid flows along the first cooling channel 1211. For example, the top cover plate 121 may be manufactured by joining two plates 1213 and 1215 (*e.g.,* FIG. 1), and the first cooling channel 1211 may include a space defined between the two plates 1213 and 1215.

The bottom cover plate 125 may be connected to the bottom surface of the cell block 110. For example, the bottom cover plate 125 may extend along the bottom surfaces of all the cell blocks 110 provided in the battery cell assembly 100. The bottom cover plate 125 may include a venting passage 125v for venting high-temperature gas generated in the cell block 110 to a space (first space) below the cell block 110. For example, the venting passage 125v of the bottom cover plate 125 communicates with a free volume FV, *e.g.,* the first space (*see* FIG. 5) provided in a pack housing 501 (*see* FIG. 5), and may form a passage for discharging gas or flames in the pack housing 501 together with the free volume FV.

The bottom cover plate 125 may include a plurality of protruding extensions 125p protruding toward the free volume FV (first space) of the pack housing 501. The plurality of protruding extensions 125p may each extend in a horizontal direction (*e.g*., X direction) along the bottom surface of the cell block 110. For example, the bottom cover plate 125 may include a main plate 125m and the plurality of protruding extensions 125p connected to a bottom surface of the main plate 125m.

The main plate 125m may include a plurality of first venting passages 1251 vertically passing through the main plate 125m. The first venting passage 1251 may be a through hole vertically passing through the main plate 125m. The first venting passage 1251 may extend in a vertical direction (e.g., Z direction) perpendicular to the bottom surface of the cell block 110, and may guide a fluid (e.g., gas) or flames in the vertical direction. Each of the plurality of protruding extensions 125p may include a second venting passage 1253 in communication with the first venting passage 1251. The second venting passage 1253 may extend in a direction different from an extension direction of the first venting passage 1251. For example, an extension direction of the second venting passage 1253 may intersect or be perpendicular to the extension direction of the first venting passage 1251. For example, the second venting passage 1253 may extend in the horizontal direction (e.g., X direction) along the bottom surface of the cell block 110 to guide a fluid (e.g., gas) or flames in the horizontal direction (e.g., X direction). The second venting passage 1253 may include an inlet in communication with the first venting passage 1251 and an outlet in communication with the free volume FV (first space) of the pack housing 501. The second venting passage 1253 may have one outlet in communication with the free volume FV (first space) of the pack housing 501, or a plurality of outlets in communication with the free volume FV (first space) of the pack housing 501.

The first venting passage 1251 and the second venting passage 1253 may communicate with each other to constitute the venting passage 125v of the bottom cover plate 125. Accordingly, the venting passage 125v of the bottom cover plate 125 may include a portion extending in the vertical direction and a portion extending in the horizontal direction. The venting passage 125v of the bottom cover plate 125 may allow high-temperature gas or flames resulting from the cell block 110 to be discharged in a predetermined direction into the free volume FV (first space) of the pack housing 501. For example, the high-temperature gas or flames generated in the cell block 110 flows downward along the first venting passage 1251, flows in the horizontal direction (e.g., X direction) along the second venting passage 1253, and is discharged to the free volume FV (first space) of the pack housing 501 through the outlet of the second venting passage 1253. The gas discharged through the outlet of the second venting passage 1253 may flow in the horizontal direction (e.g., X direction in FIG. 4B), which is the extension direction of the second venting passage 1253, in the free volume FV (first space) of the pack housing 501.

In an exemplary embodiment, in the main plate 125m of the bottom cover plate 125, the plurality of first venting passages 1251 may be arranged in the second direction (Y direction in FIG. 2) and may be spaced apart from each other in the second direction (Y direction). When viewed in a plan view, the plurality of battery cells 111 are stacked in the first direction (X direction) in each cell block 110, and each first venting passage 1251 may extend in the first direction (X direction). *See* FIGs. 3 and 4A. When viewed in a plan view, a length of the first venting passage 1251 in the first direction (X direction) may be greater than a length of the first venting passage 1251 in the second direction (Y direction).

In an exemplary embodiment, the arrangement of the plurality of protruding extensions 125p of the bottom cover plate 125 may correspond to the arrangement of the plurality of first venting passages 1251. The plurality of protruding extensions 125p may be arranged in the second direction (Y direction) and may be spaced apart from each other in the second direction (Y direction). Each of the plurality of protruding extensions 125p may be located below the corresponding first venting passage 1251. In the protruding extension 125p, the second venting passage 1253 extends in the horizontal direction (e.g., X direction), and the outlet of the second venting passage 1253 may be located on a side portion of the protruding extension 125p in the horizontal direction (e.g., X direction).

In an exemplary embodiment, as illustrated in FIG. 4B, the second venting passage 1253 of the protruding extension 125p may extend in the first direction (X direction) and may have one outlet in the side portion of the protruding extension 125p in the first direction (X direction). In this case, the gas generated in the cell block 110 is discharged through the outlet of the second venting passage 1253 to the free volume FV (first space) of the pack housing 501, and the gas discharged through the outlet of the second venting passage 1253 generally flows in the first direction (X direction), which is the extension direction of the second venting passage 1253. However, the direction of the venting passage and the arrangement thereof of the present disclosure are not limited thereto.

The side cover plate 123 may be disposed on each of one side and the other side of the cell block 110. For example, one of the side cover plates 123 may extend along the first side surfaces of all the cell blocks 110 provided in the battery cell assembly 100, and the other one of the side cover plates 123 may extend along the second side surfaces of all the cell blocks 110 provided in the battery cell assembly 100.

In an exemplary embodiment, the battery cell assembly 100 may have a side mounting structure fastened to the pack housing 501 through the side cover plate 123. In this case, the side cover plate 123 may include a fastening part 1231 fastened to the pack housing 501, in which the battery cell assembly 100 is mounted, through a fastening member such as a bolt. The fastening part 1231 may include a fastening hole H1 through which a bolt is fastened.

In other exemplary embodiments, the battery cell assembly 100 may have a mounting structure in which an upper end portion thereof is directly fastened to the pack housing 501, and in this case, the fastening part 1231 of the side cover plate 123 may be omitted.

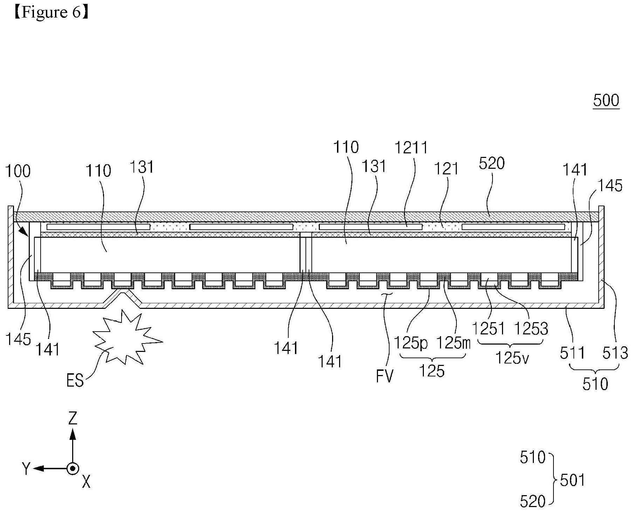

FIG. 5 is a cross-sectional view illustrating a battery pack 500 according to an exemplary embodiment of the present disclosure. FIG. 6 is a cross-sectional view illustrating an operation example of the battery pack 500. Hereinafter, descriptions overlapping with those described above will be omitted or simplified.

Referring to FIG. 5, the battery pack 500 may include the pack housing 501 and the battery cell assembly 100 mounted in the pack housing 501. The battery pack 500 may include one or more battery cell assemblies 100 mounted in the pack housing 501. In exemplary embodiments, the battery pack 500 may include two or more battery cell assemblies 100 arranged in the first direction (X direction).

The pack housing 501 may include a housing 510 having an accommodation space in which the battery cell assembly 100 is accommodated and an opening, and a pack cover 520 coupled to the housing 510 so as to cover the opening of the housing and cover the battery cell assembly 100 accommodated in the housing 510. The accommodation space of the housing 510 may be defined by a bottom wall 511 facing the bottom surface of the cell block 110 of each battery cell assembly 100, and the side wall 513 located at a perimeter of the bottom wall 511. When the battery pack 500 is mounted in a vehicle, a passenger compartment in which passengers board may be located above the pack cover 520, and the ground on which the vehicle travels may be located below the housing 510.

In an exemplary embodiment, the battery cell assembly 100 may be fixed to and supported by the pack cover 520. In another exemplary embodiment, the battery cell assembly 100 may be fixed to the housing 510 through a fastening member, such as a bolt.

The free volume FV (first space) may be provided between the bottom surface of the battery cell assembly 100 and the bottom wall 511 of the housing 510. The free volume FV may be understood as a space formed by the bottom wall 511 of the housing 510 and each battery cell assembly 100 being spaced apart from each other. In the present specification, the free volume FV (first space) may be referred to as a venting space or a buffer space.

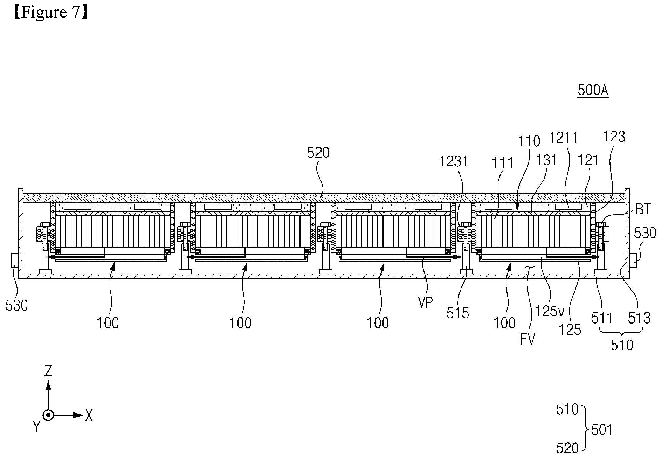

The free volume FV may communicate with the venting passage 125v of the bottom cover plate 125. For example, as shown in FIG. 7, the free volume FV (first space) may constitute a venting path VP (see FIG. 7), through which high-temperature gas or flames generated in the battery cell assembly 100 inside the battery pack 500 is discharged, together with the venting passage 125v of the bottom cover plate 125. For example, the high-temperature gas or flames generated in the battery cell 111 may flow into the free volume FV through the venting passage 125v of the bottom cover plate 125, move in a lateral direction in the pack housing 501, and then flow to an exhaust portion, *e.g.,* an exhaust device 530 (e.g., FIG. 7) connected to one side of the pack housing 501. The exhaust device 530 may include a path (e.g., a vent channel) for discharging gas and/or heat inside the battery pack 500. When the battery cell assembly 100 is in a thermal runaway state, the exhaust device 530 may delay thermal propagation by discharging the gas and/or heat inside the battery pack 500 to the outside. The venting passage 125v of the bottom cover plate 125 may allow high-temperature gas generated in the cell block 110 to have a predetermined direction (e.g., a direction toward the exhaust device 530). In this case, since the free volume FV (first space) and the venting passage 125v function as a directional venting passage in the event of thermal runaway, passengers may be protected in the situation of a thermal runaway event.

Further, a top surface of the battery cell assembly 100 may be tightly coupled to a bottom surface of the pack cover 520. When there is a space between the battery cell assembly 100 and the pack cover 520, during a thermal runaway event, high-temperature gas may be introduced into the space between the battery cell assembly 100 and the pack cover 520, and thus heat and flames may propagate to another adjacent battery cell assembly 100. In addition, there is a concern that the heat and flames may also be transmitted to the pack cover 520 to affect the passenger compartment above the pack cover 520. According to the embodiments of the present disclosure, since the top surface of the battery cell assembly 100 and the bottom surface of the pack cover 520 are tightly coupled to each other, the gas or flames generated from the battery cell assembly 100 may be induced to the venting passage 125v and the free volume FV (first space).

In addition, as illustrated in FIG. 6, when a strong external impact ES is applied to the battery pack 500 due to foreign material that are bounces onto a bottom portion of the vehicle in a hard ground driving situation such as an unpaved road, the free volume FV (first space) may absorb or buffer the external impact. Thus, the plurality of battery cell assemblies 100 may be prevented from being damaged by the impact. The free volume FV (first space) has an empty space between each of the plurality of battery cell assemblies 100 and the housing 510, and when the housing 510 is deformed toward the battery cell assembly 100 due to the impact applied to the bottom portion of the vehicle, the free volume FV may be utilized as a space for allowing some freedom of deformation of the housing 510. No other structures may be installed in the free volume FV. Alternatively, a structure for supporting the battery cell assembly 100 or the like may be partially installed in the free volume FV. When the structure is installed in the free volume FV, a space for allowing the deformation of the housing 510 should be provided between the battery cell assembly 100 and the housing 510.

A height of the free volume FV (first space), *i.e.,* a distance between the bottom wall 511 of the housing 510 and the battery cell assembly 100, may be set to sufficiently absorb an external impact. The height of the free volume FV may be determined in consideration of the dimensions and rigidity of a vehicle frame, the dimensions and rigidity of the housing 510, dimensions of the battery pack 500, the amount and discharge speed of gas generated during thermal runaway, and the like. For example, when the thickness or rigidity of the vehicle frame or the bottom wall 511 of the housing 510 is relatively large, at least one of the size and height of the free volume FV may be relatively reduced. In addition, when the thickness or rigidity of the vehicle frame or the bottom wall 511 of the housing 510 is relatively small, the possibility of deformation of the bottom wall 511 of the housing 510 is large, and thus at least one of the size and the height of the free volume FV may be relatively increased in order to protect the battery cell assembly 100. In addition, when the size of the battery pack 500 is relatively large according to the specifications of the battery pack 500, a relatively large free volume FV may be secured. When the size of the battery pack 500 is relatively small, the height of the free volume FV that can be secured may be relatively small, and it may be necessary to relatively increase the thickness and rigidity of the bottom wall 511 of the housing 510. In addition, when the height of the free volume FV is too small, the gas discharge passage is reduced so that an internal pressure of the battery pack 500 may sharply increase during thermal runaway. Accordingly, the size and height of the free volume FV (first space) may be determined in consideration of the amount and discharge speed of generated gas.

The maximum height of the free volume FV (first space) may be determined according to the degree of damage to the battery cell 111 included in the battery cell assembly 100. For example, when an allowable damage limit of the battery cell 111 is 1 mm, the free volume FV may be determined such that the battery cell 111 is not deformed more than 1 mm when the housing 510 is deformed and presses a bottom surface of the battery cell 111. In this case, the amount of deformation of the housing 510 may vary according to the thickness or rigidity of the housing 510. Thus, the size or height of the free volume FV may be determined in consideration of both the allowable damage limit of the battery cell 111 and the thickness and rigidity of the housing 510.

According to an exemplary embodiment of the present disclosure, since the free volume FV functioning as a buffer for an external impact is provided between the bottom (*i.e*., the bottom wall 511 of the housing 510) of the battery pack 500 and the battery cell assembly 100, damages to the battery cell assembly 100 and/or the battery cell 111 due to the external impact may be prevented, and ultimately, the safety of the battery pack 500 may be improved.

Furthermore, according to an exemplary embodiment of the present disclosure, the free volume FV and the venting passage 125v provided in the bottom cover plate 125 of the battery cell assembly 100 together form a directional venting passage in the battery pack 500, and a high-temperature gas or flames in the battery pack 500 may be discharged to the outside of the battery pack 500 through the directional venting passage. Accordingly, passengers may be protected in the situation of a thermal runaway event, and thus safety of the battery pack 500 may be improved.

Furthermore, as illustrated in FIG. 6, the bottom cover plate 125 may prevent damage to the battery cell assembly 100 in a situation in which the external impact ES is applied to the battery pack 500. For example, even when the amount of deformation of the bottom wall 511 of the pack housing 501 exceeds the height of the free volume FV (first space) provided to the pack housing 501 due to the external impact ES, the protruding extension 125p of the bottom cover plate 125 may function as a protective member that protects the cell block 110, thereby improving the safety of the battery pack 500.

FIG. 7 is a cross-sectional view illustrating a battery pack 500A according to an exemplary embodiment of the present disclosure. Hereinafter, descriptions overlapping with those described above will be omitted or simplified.

Referring to FIG. 7, the battery pack 500A may include a pack housing 501 and a plurality of battery cell assemblies 100 mounted in the pack housing 501.

The plurality of battery cell assemblies 100 may be mounted in the pack housing 501 so as to be arranged in the first direction (X direction). Although the battery pack 500A is illustrated in FIG. 7 as including four battery cell assemblies 100 arranged in the first direction (X direction), the present disclosure is not limited thereto. For example, the battery pack 500A may include two or more battery cell assemblies 100 arranged in the first direction (X direction).

Each of the plurality of battery cell assemblies 100 may have a side mounting structure fastened to support blocks 515 of the pack housing 501 through side cover plates 123 provided on one or both side portions thereof. More specifically, the support blocks 515 may be provided on a bottom wall 511 of the pack housing 501, and the fastening part 1231 provided in the side cover plate 123 of each battery cell assembly 100 may be fastened to the corresponding support block 515 of the support blocks 515 through a fastening member, such as a bolt.

According to exemplary embodiments of the present disclosure, since the plurality of battery cell assemblies 100 are fastened to the pack housing 501 in the battery pack 500A by a side mounting method, damage due to swelling of the battery cells 111 may be reduced, and the structural safety of the plurality of battery cell assemblies 100 may be improved.

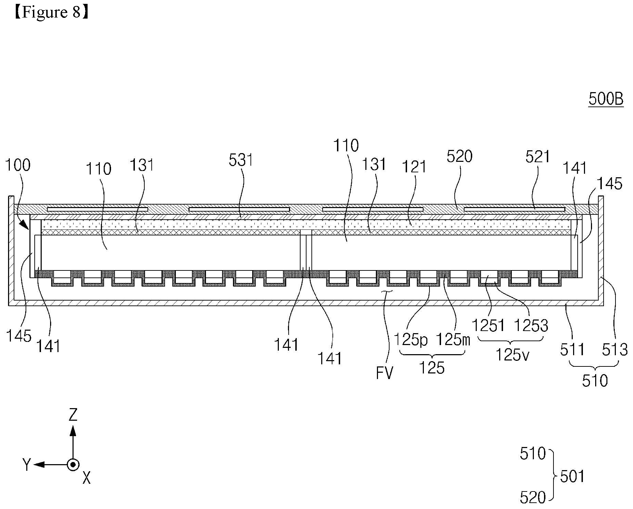

FIG. 8 is a cross-sectional view illustrating a battery pack 500B according to exemplary embodiments of the present disclosure. Hereinafter, descriptions overlapping with those described above will be omitted or simplified.

Referring to FIG. 8, the battery pack 500B may include a pack housing 501 and the battery cell assembly 100 mounted in the pack housing 501. The battery cell assembly 100 may be in contact with a bottom surface of a pack cover 520. For example, the battery cell assembly 100 may be in close contact with the bottom surface of the pack cover 520 by a second thermally conductive adhesive layer 531 interposed between the battery cell assembly 100 and the pack cover 520. For example, the second thermally conductive adhesive layer 531 may include a thermal interface material (TIM). The second thermally conductive adhesive layer 531 may prevent an air layer from being formed between each battery cell assembly 100 and the pack cover 520. The second thermally conductive adhesive layer 531 may be configured to transmit heat between the battery cell assembly 100 and the pack cover 520. Thus, the heat of the battery cell assembly 100 may be discharged toward the pack cover 520 through the second thermally conductive adhesive layer 531.

When the pack cover 520 is provided with a suitable cooling device, the heat of the battery cell assembly 100 may be transmitted to the cooling device through the second thermally conductive adhesive layer 531. The cooling device may include a second cooling channel 521 which is provided, for example, to the pack cover 520 and through which a cooling fluid flows. When the second cooling channel 521 is provided in the pack cover 520, a first cooling channel (see 1211 in FIG. 5) provided in the top cover plate 121 may be omitted. However, the present disclosure is not limited thereto. If the first cooling channel 1211 and the second cooling channel 521 are both used in the battery pack, the cooling fluids for the first /second cooling channels may be the same or different from each other. Since the second thermally conductive adhesive layer 531 is disposed between a top surface of each battery cell assembly 100 and the pack cover 520, and the second cooling channel 521 is provided in the pack cover 520, the battery cell assembly 100 can be cooled.

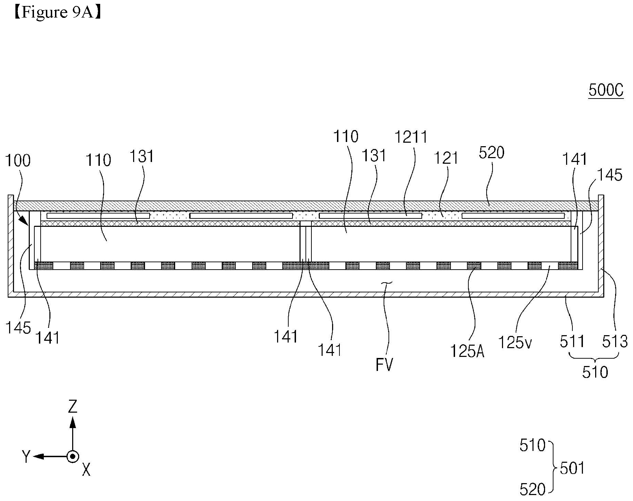

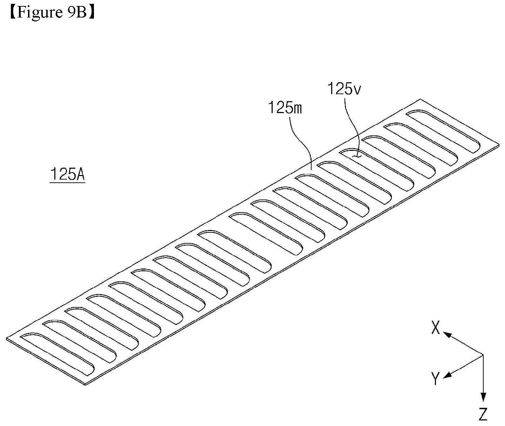

FIG. 9A is a cross-sectional view illustrating a battery pack 500C according to an exemplary embodiment of the present disclosure. FIG. 9B is a perspective view illustrating a bottom cover plate 125A of the battery cell assembly 100 illustrated in FIG. 9A. Hereinafter, descriptions overlapping with those described above will be omitted or simplified.

Referring to FIGS. 9A and 9B, in the battery cell assembly 100 of the battery pack 500C, the bottom cover plate 125A may have a substantially flat plate shape. The bottom cover plate 125A includes venting passages 125v vertically passing through the bottom cover plate 125A, and each of the venting passages 125v may communicate with the free volume FV (first space). The bottom cover plate 125A illustrated in FIGS. 9A and 9B may be substantially the same as or similar to the bottom cover plate 125, from which the protruding extension 125p is removed, described with reference to FIGS. 1 to 4B.

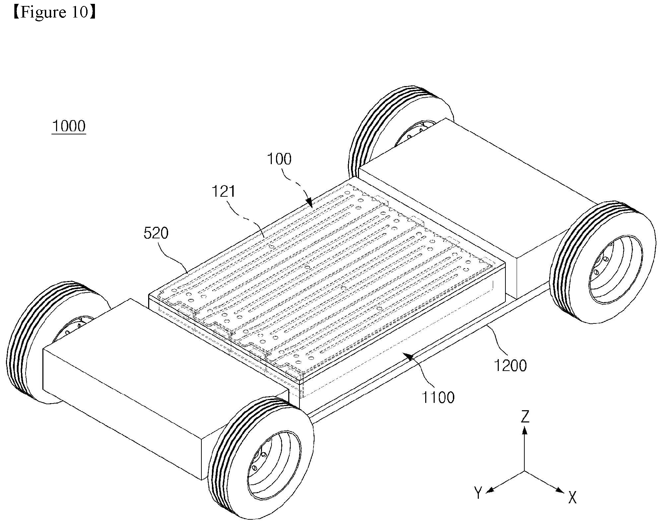

FIG. 10 is a schematic view illustrating an electric mobility device (*e.g.,* an electric vehicle) 1000 equipped with a battery pack 1100 according to exemplary embodiments of the present disclosure.

In FIG. 10, for simple illustration, only a vehicle body frame 1200 forming a lower frame of the vehicle, the battery pack 1100 coupled to the vehicle body frame 1200, and tires are shown. The battery pack 1100 may include the battery pack 500, 500A, 500B, and 500C described with reference to FIGS. 5, 7, 8, and 9A.

In the case of a typical battery pack, battery cell assemblies are installed on a bottom portion of a pack housing of the battery pack. However, in the present embodiments, the battery cell assemblies 100 of the battery pack 1100 may have a structure supported by the pack cover 520 of the pack housing, and a first space may be provided below the battery cell assemblies 100. That is, since there is no space between the battery cell assembly 100 and the pack cover 520, it is possible to prevent gas generated in the battery cell assembly 100 from being transmitted to a passenger compartment at an upper portion of the vehicle. The gas and/or flames are directed to the first space (free volume FV,see FIG. 5) provided in the battery cell assembly 100 and the pack housing of the battery pack 1100. The gas/flames flows through the first space (free volume FV) and is discharged to a lower side of the vehicle through a gas vent portion installed in the battery pack 1100, e.g., an exhaust device 530 (in FIG. 7). In an embodiment of the present disclosure, the gas vent portion may be located at a side of the housing facing a rear side of the electric mobility device. In an embodiment of the present disclosure, the gas vent portion may include a relief valve and/or a rupture valve. In addition, according to the present embodiments, since the free volume FV is provided between the battery cell assembly 100 and the pack housing in the battery pack 1100, damage to the battery cell assembly 100 may be prevented even when the pack housing is deformed.

According to the embodiments of the present disclosure, the battery pack 1100 and the electric mobility device (*e.g.,* the electric vehicle 1000) having the same may enhance the safety of passengers. In addition, the battery cell assembly 100, which is a key component, may be protected, and the durability of the battery pack 1100 and the electric mobility device 1000 may be improved.

As above, the present disclosure has been described in more detail through the drawings and embodiments. However, since the configuration described in the drawings or embodiments described herein is merely one embodiment of the present disclosure and do not represent the overall technical idea of the present disclosure, it should be understood that the present disclosure covers various equivalents, modifications, and substitutions at the time of filing of this application.

### [Description of Reference Numerals]

100: battery cell assembly, 110: cell block
111: battery cell, 120: case
121: top cover plate, 123: side cover plate
125: bottom cover plate, 125v: venting passage
500: battery pack, 510: housing
520: pack cover
[0067] The invention may further include one or more of the following items:

### [ITEMS]

### [Item 1]

A battery pack comprising:
a battery cell assembly including a cell block having a plurality of battery cells, and a bottom cover plate under a bottom surface of the cell block;
a housing having an opening, and accommodating the battery cell assembly; and
a pack cover coupled to the housing and covering the opening,
wherein the battery cell assembly and a bottom wall of the housing are spaced apart from each other to form a first space, and
wherein the bottom cover plate comprises a venting passage in communication with the first space.

### [Item 2]

The battery pack of item 1, wherein the bottom cover plate further comprises:
a protruding extension protruding toward the first space and extending in a first direction along the bottom surface of the cell block,
wherein the venting passage includes a portion extending in the first direction in the protruding extension.

### [Item 3]

The battery pack of item 1, wherein the bottom cover plate further comprises:
a main plate facing the bottom surface of the cell block; and
a protruding extension extending in a first direction along the bottom surface of the cell block below the main plate,
wherein the venting passage comprises:
   a first venting passage vertically passing through the main plate; and
   a second venting passage extending in the first direction in the protruding extension and having an inlet connected to the first venting passage and an outlet connected to the first space.

### [Item 4]

The battery pack of item 3, wherein the first venting passage extends in a vertical direction, and wherein the second venting passage extends in a horizontal direction.

### [Item 5]

The battery pack of item 1, wherein the battery cell assembly further comprises:
a top cover plate on a top surface of the cell block,
wherein the top cover plate comprises a first cooling channel configured to allow a first cooling fluid to flow therethrough.

### [Item 6]

The battery pack of item 5, wherein the battery cell assembly further comprises:
a first thermally conductive adhesive layer between the top cover plate and the cell block.

### [Item 7]

The battery pack of item 1, wherein the battery cell assembly is coupled to the pack cover.

### [Item 8]

The battery pack of item 7, wherein the pack cover comprises a second cooling channel configured to allow a second cooling fluid to flow therethrough.

### [Item 9]

The battery pack of item 8, further comprising:
a second thermally conductive adhesive layer between the battery cell assembly and the pack cover.

### [Item 10]

The battery pack of item 1, wherein the battery cell assembly further comprises:
a side cover plate on at least one side of the cell block, and
wherein the side cover plate is fastened to the housing.

### [Item 11]

The battery pack of item 1, wherein the battery cell assembly further includes side cover plates spaced apart from each other, the cell block disposed between the side cover plates, and wherein the side cover plates are fastened to different support blocks provided in the housing.

### [Item 12]

The battery pack of item 11, wherein a sealed portion of a pouch in the pouch-type battery cell faces the first space.

### [Item 13]

The battery pack of item 1, wherein each of the plurality of battery cells is a cylindrical-type battery cell or a prismatic-type battery cell and comprises a venting portion.

### [Item 14]

The battery pack of item 13, wherein the venting portion of the cylindrical-type battery cell or the prismatic-type battery cell faces the first space.

### [Item 15]

An electric mobility device comprising a battery pack, the battery pack comprising:
a battery cell assembly including a cell block having a plurality of battery cells, and a bottom cover plate under a bottom surface of the cell block;
a housing having an opening, and accommodating the battery cell assembly; and
a pack cover coupled to the housing and covering the opening,
wherein the battery cell assembly and a bottom wall of the housing are spaced apart from each other to form a first space, and
wherein the bottom cover plate comprises a venting passage in communication with the first space.

### [Item 16]

The electric mobility device of item 15, wherein the electric mobility device is an electric vehicle.

### [Item 17]

The electric mobility device of item 15, wherein the battery pack further comprises:
an exhaust portion in communication with the first space.

### [Item 18]

The electric mobility device of item 17, wherein the exhaust portion is located at a side of the housing facing a rear side of the electric mobility device.

### [Item 19]

A battery pack, comprising:
a battery cell assembly including a cell block having a plurality of battery cells, a top cover plate on a top surface of the cell block, a bottom cover plate under a bottom surface of the cell block, a side cover plate on at least one side of the cell block, and a first thermally conductive adhesive layer between the top cover plate and the cell block;
a housing having an opening, and accommodating the battery cell assembly;
a pack cover coupled to the housing and covering the opening; and
a second thermally conductive adhesive layer between the battery cell assembly and the pack cover,
wherein the battery cell assembly and a bottom wall of the housing are spaced apart from each other to form a first space,
wherein the bottom cover plate comprises a venting passage in communication with the first space,
wherein the top cover plate comprises a first cooling channel configured to allow a first cooling fluid to flow therethrough, and
wherein the pack cover comprises a second cooling channel configured to allow a second cooling fluid to flow therethrough.

### [Item 20]

The battery pack of item 19, further comprising:
an exhaust portion in communication with the first space.

## Claims

1. A battery pack comprising:
a plurality of battery cells;
a bottom cover plate in contact with at least one region of a bottom surface of the plurality of battery cells;
a housing having an opening and accommodating the plurality of battery cells; and
a pack cover coupled to the housing and covering the opening of the housing,
wherein the plurality of battery cells and a bottom wall of the housing are spaced apart from each other to form a first space,
wherein the bottom cover plate includes a venting passage in communication with the first space,
wherein the bottom cover plate includes a main plate facing the at least one region of the bottom surface of the plurality of battery cells and a protruding extension extending from the main plate in a direction toward the bottom wall, and
wherein the venting passage includes a first venting passage passing through the main plate, and a second venting passage in communication with the first venting passage and extending along the bottom wall.

2. The battery pack of claim 1, wherein the protruding extension of the bottom cover plate protrudes from the main plate toward the first space.

3. The battery pack of claim 1, wherein the first venting passage vertically penetrates the main plate.

4. The battery pack of claim 3, wherein an extension direction of the second venting passage crosses or is perpendicular to an extension direction of the first venting passage.

5. The battery pack of claim 1, further comprising a top cover plate on a top surface of the plurality of battery cells,
wherein the top cover plate includes a first cooling channel configured to allow a first cooling fluid to flow therethrough.

6. The battery pack of claim 5, further comprising a first thermally conductive adhesive layer between the top cover plate and the plurality of battery cells.

7. The battery pack of claim 1, wherein the plurality of battery cells are fixed to the pack cover.

8. The battery pack of claim 7, wherein the pack cover includes a second cooling channel configured to allow a second cooling fluid to flow therethrough.

9. The battery pack of claim 8, further comprising a second thermally conductive adhesive layer between the plurality of battery cells and the pack cover.

10. The battery pack of claim 1, further comprising a side cover plate on at least one side of the plurality of battery cells,
wherein the side cover plate is fastened to the housing.

11. The battery pack of claim 1, further comprising side cover plates spaced apart from each other with the plurality of battery cells therebetween, and
wherein the side cover plates are respectively fastened to different support blocks on the housing.

12. The battery pack of claim 1, wherein each of the plurality of battery cells includes a sealed portion.

13. The battery pack of claim 12, wherein the sealed portion of each of the plurality of battery cells faces the first space.

14. The battery pack of claim 1, wherein each of the plurality of battery cells includes a venting portion.

15. The battery pack of claim 14, wherein the venting portion of each of the plurality of battery cells faces the first space.
